# EUROPÄISCHE PATENTSCHRIFT

(11) **EP 0 364 772 B1**
(45) Veröffentlichungstag und Bekanntmachung des Hinweises auf die Patenterteilung: **01.09.1993**
(21) Anmeldenummer: 89117812.1
(22) Anmeldetag: 27.09.1989
(51) Int. Cl.: C08F 220/24, C08F 220/28, D06M 15/277, C14C 9/00, D21H 17/37

(54) **Perfluoralkylgruppen enthaltende Copolymerisate**
Copolymers containing perfluor alkyl groups
Copolymères contenant des groupes perfluoralkyl

(30) Priorität: 08.10.1988 DE 3834322
(43) Veröffentlichungstag der Anmeldung: 25.04.1990
(73) Patentinhaber: BAYER AG, 51368 Leverkusen (DE)
(72) Erfinder: Röttger, Jutta, Dr., D-5000 Köln 80 (DE); Süling, Carlhans, Dr., D-5068 Odenthal (DE); Kortmann, Wilfried, Dipl.-Ing., D-5992 Nachrodt-Wiblingwerde (DE); Bömer, Bruno, Dr., D-5060 Bergisch-Gladbach 2 (DE); Renner, Gerd, Dr., D-5000 Köln 80 (DE)

(56) Entgegenhaltungen:
- DE-A- 2 358 647
- US-A- 4 127 711

## Beschreibung

Die Erfindung betrifft Copolymerisate und Pfropfcopolymerisate aus Perfluoralkyl-acrylaten oder -methacrylaten und Estern der allgemeinen Formel (I) 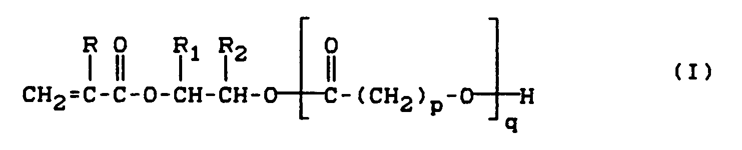
worin
- R, R₁, R₂: Wasserstoff oder Methyl,
- p: 2 bis 6 und
- q: 2 bis 200 bedeuten,
ihre Herstellung und Verfahren zur Ausrüstung von Textilmaterialien, Leder und Papier.

Unter Perfluoralkyl(meth)acrylaten werden Verbindungen der allgemeinen Formeln 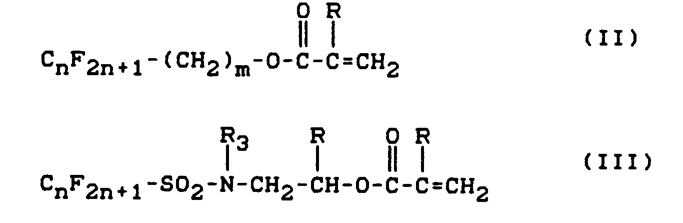
und 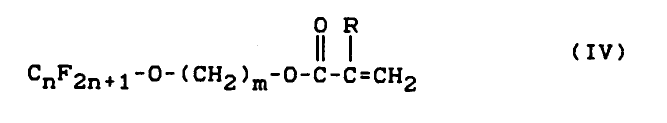
verstanden, worin
- R: Wasserstoff oder Methyl,
- R₃: Methyl oder Ethyl,
- m: 1 bis 4 und
- n: 6 bis 12 bedeuten.

Von den Estern der Formel I werden die mit R = Wasserstoff oder Methyl, R₁ = R₂ = Wasserstoff, p = 5 und q = 8 bis 30 bevorzugt. Die Ester (I) sind beispielsweise aus der US-PS 3 655 631 bekannt.

Die Comonomeren (II) - (IV), die daraus hergestellten Polymeren und deren Verwendung zur öl- und wasserabweisenden Ausrüstung von Textilien sind u.a. aus den den US-Patentschriften 3 403 122, 3 847 657, 3 916 053 und 3 919 183 bekannt.

Copolymerisate mit speziellen Eigenschaften können durch Copolymerisation der Ester (I) und der Perfluoralkyl(meth)acrylate mit weiteren olefinisch ungesättigten copolymerisierbaren Monomeren erhalten werden. Diese Comonomeren können in Anteilen von z.B. bis zu 65 Gew.-% einpolymerisiert werden. Beispiele für Comonomere sind Styrol, Acrylnitril, Vinylacetat, Acryl- und Methacrylsäureester, die sich von niederen aliphatischen Alkoholen oder auch von höheren aliphatischen Alkoholen mit bis zu 22 Kohlenstoffatomen ableiten. Beispiele für diese Alkohole sind Isobutanol, Ethylhexyl-, Lauryl-, Stearyl- und Oleylalkohol.

Beispielsweise können durch Einpolymerisieren dieser Monomeren die Filmbildungstendenz und -temperatur in gewünschter Weise beeinflußt werden.

Anwendungstechnisch besonders interessante erfindungsgemäße Copolymerisate sind in der Lage, klare Filme zu bilden und ihre Filmbildungstemperatur liegt zwischen 50 und 200°C.

Die erfindungsgemäßen Copolymerisate können auch als Pfropfcopolymerisate vorliegen, die unter Verwendung bekannter Pfropfgrundlagen aus den vorstehend beschriebenen Comonomeren hergestellt werden.

Die Pfropfcopolymerisation unter Verwendung von Perfluoralkyl(meth)acrylaten in wäßriger Emulsion ist z.B. aus den deutschen Offenlegungsschriften 3 407 361 und 3 407 362 bekannt. Als Pfropfgrundlagen eignen sich besonders hydrophobe Polymere in Form von wäßrigen ergebnisse, wenn die Pfropfgrundlagen selbst die Eigen-Dispersionen. Man erhält besonders gute Anwendungsschaften von Hydrophobierungsmitteln haben. Beispiele für derartige Pfropfgrundlagen sind Melaminpolykondensate. Sie können z.B. erhalten werden durch Polykondensation von Methylol-aminotriazinen, deren Veretherungs- oder Veresterungsprodukten mit Carbonsäuren und primären oder sekundären Aminen. Sie werden beispielsweise in der DE-PS 956 990 beschrieben.

Das bevorzugte Gewichtsverhältnis der Comonomeren (I) zu den Perfluoralkylmonomeren (II), (III) und/oder (IV) liegt bei 1 : 1,5 bis 6, insbesondere bei 1 : 2,5 bis 4,5.

Der Anteil der Comonomeren in den erfindungsgemäßen Copolymeren liegt bevorzugt bei 5 bis 35 Gew.-%, insbesondere 8 bis 20 Gew.-%, der Ester (I), 15 bis 65 Gew.-%, insbesondere 25 bis 55 Gew.-%, der Perfluoralkylmonomeren (II), (III) und/oder (IV) und 0 bis 65 Gew.-%, insbesondere 35 bis 60 Gew.-% von weiteren olefinisch ungesättigten copolymerisierbaren Monomeren.

Die erfindungsgemäßen Copolymerisate werden vorzugsweise als wäßrige Dispersionen in den Handel gebracht.

Die Herstellung der erfindungsgemäßen Copolymerisate erfolgt in Lösung, Dispersion oder Emulsion. Es kann vorteilhaft sein, bei der Copolymerisation Hilfslösungsmittel zu verwenden, die z.B. in der US-PS 3 062 765 beschrieben werden. Weiterhin ist es möglich, mit Wasser nicht mischbare Hilfslösungsmittel wie Essigsäureethylester oder Chlorfluorokohlenstoffe zu verwenden. Es kann vorteilhaft sein, unter Ausschluß von Sauerstoff oder Luft, d.h. unter Verwendung von Inertgasen, zu polymerisieren. Falls Hilfslösungsmittel verwendet werden, ist es erforderlich, nach Beendigung der Polymerisation die Hilfslösungsmittel destillativ abzutrennen. Bei der Polymerisation wird man aus Viskositätsgründen nur in Ausnahmefällen die Verfahrensweise der Massepolymerisation nutzen.

Die Copolymerisation wird durch bekannte Radikale bildenden Starter oder Startersysteme wie Peroxide, aliphatische Azoverbindungen oder Redoxsysteme initiiert. Im allgemeinen ist es vorteilhaft, ein Mengenverhältnis von Starter zum Monomergemisch von 0,2 bis 0,4 : 100, vorzugsweise von 0,3 bis 0,35 : 100, zu wählen.

Die Polymerisationstemperatur richtet sich nach dem jeweiligen Initiatorsystem. Allgemein polymerisiert man bei Temperaturen von 40 bis 110°C. Spezielle Redoxsysteme erlauben es auch, die Polymerisation bereits bei 25°C durchzuführen.

Eine besonders bevorzugte Ausführungsform der erfindungsgemäßen Coplymerisation ist die Polymerisation in wäßriger Dispersion oder Emulsion. Als Hilfsmittel werden bei dieser Verfahrensweise Dispergatoren und Emulgatoren verwendet. Als Dispergatoren sind vorzugsweise Polyvinylalkohole oder Cellulosederivate wie Celluloseester oder Celluloseether geeignet. Als Emulgatoren kann man sowohl nichtionische, anionische wie auch kationische Emulgatoren verwenden. Besonders vorteilhaft ist es, Gemische aus entweder anionischen und nichtionischen Emulgatoren oder aus kationischen und nichtionischen Emulgatoren zu verwenden. Die Emulgatormengen liegen im bekannten Rahmen. Zur Erzielung einer gewünschten Teilchengrößenverteilung und zur Verbesserung der anwendungstechnischen Eigenschaften ist es besonders vorteilhaft, Gemische aus kationischen und/oder nichtionischen Emulgatoren zu verwenden. Durch nichtionische Emulgatoren wird besonders die Stabilität der Copolymerisatdispersion erhöht.

Beispiele für nichtionische Emulgatoren sind Polyglykolether, z.B. Ethylenoxid/Propylenoxid-Block- oder -Copolymere sowie Alkoxylierungsprodukte, insbesondere Ethoxylierungsprodukte von Fettalkoholen, Alkylphenolen, Fettsäuren, Fettsäureamiden, Sorbitmonooleat.

Beispiele für kationische Emulgatoren sind quartäre Ammonium- oder Pyridiniumsalze, z.B. Stearyldimethylbenzylammonniumchlorid oder N,N,N-Trimethyl-N-perfluoroctansulfonamidopropylammoniumchlorid.

Die Verwendung von Alkyl(meth)acrylaten als Comonomere bei der Herstellung von Perfluoralkylcopolymerisaten und die Verwendung dieser Copolymerisate zur Textilausrüstung ist bereits bekannt und wird beispielsweise in den US-Patentschriften 2 803 615 und 3 062 765 beschrieben. Mit diesen Perfluoralkylcopolymerisaten kann eine weitere Verbesserung der Oleophob-/Hydrophob-Eigenschaften nur durch eine Erhöhung der Anteile an Perfluoralkylmonomeren erreicht werden. Diese Vorteile werden aber mit Nachteilen wie Verhärtungen und Verklebungen, die sich negativ auf den Griff der damit ausgerüsteten Textilien auswirken, erkauft.

Es ist auch bekannt, polare Comonomere zur Herstellung von Perfluoralkyl-Copolymeren zu verwenden. Z.B. wird in der US-PS 4 557 837 die Synthese spezieller in Methanol löslicher Perfluoralkylpolymerer durch Copolymerisation von Perfluoralkyl(meth)acrylaten und solchen polaren Comonomeren, die eine Solubilisierung der Copolymeren in Methanol bewirken, beschrieben. Derartige Comonomere sind beispielsweise Acrylsäure- oder Methacrylsäureester, die mit Glykolen wie Ethylenglykol oder Triethylenglykol verestert sind. Diese Perfluoralkylacrylatcopolymerisate sind für eine Oleophobausrüstung von Textilien geeignet, nicht aber für eine gleichzeitige Hydrophobausrüstung.

Die Verwendung von polaren (Meth)Acrylaten als Comonomere ist weiterhin bekannt aus DE-OS 2 358 647, worin hydrophile Segmente von Ethylenoxidblöcken eingebaut sind. Bei der Copolymerisation mit Fluoralkylmonomeren erhält man Ausrüstungsmittel, die Textilien an der Luft oleophobe und hydrophobe Eigenschaften verleihen; in Wasser bleiben die oleophoben Eigenschaften erhalten, während die hydrophoben Eigenschaften in hydrophile umschlagen, die die Schmutzablösung ("soil release") erleichtern.

Es bestand darum die Aufgabe, hochwirksame Ausrüstungsmittel zur Verfügung zu stellen, die gleichzeitig oleophobierend und hydrophobierend wirken und nicht die geschilderten Nachteile zeigen.

Es wurde nun gefunden, daß sich die erfindungsgemäßen Copolymeren ausgezeichnet zum gleichzeitigen Hydrophobieren und Oleophobieren eignen. Die Verwendung der Ester (I) als Copolymere erhöht die Tendenz zur Bildung von homogenen Filmen. Die Ester (I) wirken als "innere" Verträglichkeitsvermittler. Vorteilhaft für die erfindungsgemäßen Copolymerisate ist, daß die Verträglichkeitsvermittler als Comonomere polymerfixiert sind und nicht über Diffusionsprozesse oder Waschvorgänge aus dem Ausrüstungsmittle entfernbar sind.

Mit den erfindungsgemäßen Copolymeren können natürliche und synthetische Materialien wie Fasern, Filamente, Garne, Vliese, Gewebe, Gewirke und Gestricke, insbesondere Teppiche, aus insbesondere Cellulose und ihren Derivaten, aber auch aus Polyester-, Polyamid- und polyacrylnitrilmaterialien, Wolle oder Seide erfolgreich oleophob und hydrophob ausgerüstet werden.

Die Ausrüstung erfolgt nach bekannten Verfahren, vorzugsweise nach dem Auszieh- oder Foulard-Verfahren, beispielsweise zwischen Raumtemperatur und 40°C, aber auch durch Pflatschen oder Besprühen mit einer nachgeschalteten Temperaturbehandlung bei 80 bis 180°C, vorzugsweise 120 bis 150°C.

### Beispiel 1

### a) Herstellung eines als Pfropfgrundlage verwendbaren Polykondensats

1,5 Mol Behensäure werden aufgeschmolzen und innerhalb 30 Minuten gleichzeitig mit 1 Mol Melaminhexamethylolpentamethylether und 0,9 Mol N-Methyldiethanolamin versetzt. Dabei wird die Schmelze auf 150°C gebracht und 3 Stunde bei dieser Temperatur gehalten.

Anschließend wird in die Schmelze die gleiche Gewichtsmenge eines Paraffins vom Schmelzpunkt 52°C eingetragen.

### b) Herstellung einer Pfropfcopolymerisationsdispersion unter Verwendung eines Monomeren der Formel (I)

Man bereitet folgende Lösungen bei 50°C:

### Lösung 1

760,0 Gew.-Tle. entionisiertes Wasser
4,54 Gew.-Tle. eines ethoxylierten Nonylphenols mit 10 EO (Ethylenoxideinheiten)
1,8 Gew.-Tle. Benzyldodecyldimethylammoniumchlorid

### Lösung 2

300 Gew.-Tle. Essigsäureethylester
57,6 Gew.-Tle. N-Methyl-N-perfluoroctansulfonamidoethylmethacrylat
29,5 Gew.-Tle. Stearylmethacrylat
23,8 Gew.-Tle. Vinylacetat
22,0 Gew.-Tle. Monomeres der Formel I mit p = 5, q = 10, R = CH₃, R₁, R₂ = H
22,8 Gew.-Tle. Pfropfgrundlage nach 1 a)
Man bereitet folgende Lösung bei 30°C:

### Lösung 3

0,57 Gew.-Tle. t-Butylperpivalat
0,804 Gew.-Tle. Dilaurylperoxid
4,5 Gew.-Tle. Essigsäureethylester
Die Lösungen 1 und 2 werden bei 50°C emulgiert. Die erhaltene Emulsion gibt man in einen Reaktor, der mit Rührer, Rückflußkühler und Innenthermometer ausgestattet ist und läßt auf 30°C abkühlen. Man setzt Lösung 3 bis 30°C unter Rühren zu und steigert die Temperatur innerhalb 1 Stunde von 30 auf 50°C, sowie in einer weiteren Stunde von 50 auf 70°C. Danach beläßt man das Reaktionsgemisch 2 Stunden bei 70°C. Anschließend hält man die Temperatur für 3 Stunden bei 70 bis 80°C und destilliert dabei den Essigsäureethylester ab.

| | |
|---|---|
| Feststoffgehalt: | 14,2 % |
| Fluorgehalt im Feststoff: | 21,1 % |
| Mittlere Teilchengröße: (nach Lichtstreuung) | 237 nm |

### Beispiel 2 (Vergleich)

### Herstellung einer Pfropfcopolymerisatdispersion ohne Verwendung eines Monomeren der Formel (I)

Man bereitet folgende Lösungen bei 50°C:
Lösung 1: wie im Beispiel 1 b beschrieben,
Lösung 2: wie im Beispiel 1 b beschrieben, aber ohne Monomeres I.

Man bereitet folgende Lösung bei 30°C:
Lösung 3: wie im Beispiel 1 b beschrieben.

Die Lösungen werden anschließend nach dem im Beispiel 1 b beschriebenen Verfahren umgesetzt.

| | |
|---|---|
| Feststoffgehalt: | 13,1 % |
| Fluorgehalt im Feststoff: | 26,7% |
| Mittlere Teilchengröße: (nach Lichtstreuung) | 270 nm |

### Beispiel 3

### Herstellung einer Pfropfcopolymerisatdispersion unter Verwendung eines Monomeren der Formel (I)

### 1. Stufe: herstellung des Vorlatex

Man bereitet folgende Lösungen bei 50°C:

### Lösung 1

800 Gew.-Tle. entionisiertes Wasser
5 Gew.-Tle. eines ethoxylierten Nonylphenols mit 10 EO
2,8 Gew.-Tle. eines ethoxylierten Nonylphenols mit 20 EO
6,9 Gew.-Tle. Benzyldodecyldimethylammoniumchlorid

### Lösung 2

402 Gew.-Tle. Essigsäureethylester
43,5 Gew.-Tle. Adipinsäuredioctylester
54,2 Gew.-Tle. N-Methyl-N-perfluoroctansulfonamidoethylmethacrylat
24,9 Gew.-Tle. Stearylmethacrylat
1,44 Gew.-Tle. Isobutylmethacrylat
18,5 Gew.-Tle. Monomeres der Formel I mit p = 5; q = 20; R = CH₃; R₁, R₂ = H
Man bereitet folgende Lösung bei Raumtemperatur:

### Lösung 3

0,9 Gew.-Tle. t-Butylperpivalat
2,1 Gew.-Tle. Essigsäureethylester
0,9 Gew.-Tle. Didecanoylperoxid
Aus den Lösungen 1 und 2 wird eine Mischung hergestellt und diese fünfmal bei 50°C emulgiert. Die erhaltene Emulsion wird in einen Reaktor gegeben, der mit Rührer, Rückflußkühler und Innenthermometer versehen ist. Man gibt unter Rühren bei 50°C Lösung 3 zu. Es wird noch eine halbe Stunde bei 50°C gerührt, dann die Temperatur innerhalb 1 Stunde von 50°C auf 70°C erhöht und danach 2 Stunden bei 70°C gehalten. Anschließend läßt man das Reaktionsgemisch 3 Stunden am Rückfluß bei ca. 70°C reagieren. Man erhält einen Vorlatex mit 10.4% Feststoffgehalt.

### 2. Stufe: Herstellung der Pfropfcopolymerisatdispersion

Man bereitet folgende Lösungen bei 50°C:

### Lösung 1

1357 Gew.-Tle. Vorlatex aus Stufe 1
34,3 Gew.-Tle. Essigsäureethylester
45,5 Gew.-Tle. Isobutylmethacrylat
2,8 Gew.-Tle. N-Methyl-N-perfluoroctansulfonamidoethylmethacrylat

### Lösung 2

0,943 Gew.-Tle. t-Butylperpivalat
1,75 Gew.-Tle. Essigsäureethylester
0,48 Gew.-Tle. Didecanoylperoxid
Lösung 1 wird bei 50°C in einer Emulgiermaschine emulgiert und anschließend in einen Reaktor mit Rührer, Rückflußkühler und Innenthermometer gegeben.

Lösung 2 wird unter Rühren bei 50°C zugegeben und alles noch eine halbe Stunde bei 50°C gerührt. Anschließend wird innerhalb 1 Stunde von 50°C auf 70°C geheizt und noch 2 Stunden bei 70°C gehalten. Danach wird die Temperatur 2 Stunden bei 70 bis 80°C gehalten und dabei der Essigsäureethylester abdestilliert. Schließlich wird noch 1 Stunde bei 80°C nachgerührt.

| | |
|---|---|
| Feststoffgehalt: | 22,1% |
| Fluorgehalt im Feststoff: | 12,2% |

### Beispiel 4 (Vergleich)

### Herstellung einer Pfropfcopolymerisatdispersion ohne Verwendung eines Monomeren der Formel (I)

Die Herstellung erfolgt wie im Beispiel 3 mit den dort genannten Lösungen mit dem einzigen Unterschied, daß Lösung 2 kein Monomeres (I) enthält.

| | |
|---|---|
| Feststoffgehalt: | 21,5% |
| Fluorgehalt im Feststoff: | 12,1% |

Tabelle 1 und 2 zeigen die anwendungstechnischen Ergebnisse, die erhalten werden, wenn die nach Beispiel 1 b bis 4 hergestellten Copolymerisatdispersionen bei der Oleophob/Hydrophobausrüstung von Teppichen auf Basis von Polyamidfasern eingesetzt werden.

**Tabelle 1**

| | Oleophobie¹⁾ | Hydrophobie²⁾ |
|---|---|---|
| Beispiel 1 b | 4 | 70/30 |
| Beispiel 2 | 3 | 80/20 |

| | | |
|---|---|---|
| 1) nach AATCC-Test-Methode 118 | | |
| 2) Beständigkeit gegen wäßrig-isopropanolische Lösungen nach Standard-Methode | | |

Gegenüber den ohne Verwendung von Monomeren der Formel (I) hergestellten Copolymerisatdispersionen (Beispiel 2) ergibt sich eine deutliche Verbesserung sowohl der oleophobierenden als auch der hydrophobierenden Wirkung bei Copolymerisation mit solchen Monomeren (Beispiel 1 b). Das Anschmutzverhalten der mit den erfindungsgemäßen Copolymerisatdispersionen ausgerüsteten Teppiche ist verbessert und entspricht den erhöhten Anforderungen.

**Tabelle 2**

| | Oleophobie¹⁾ | Hydrophobie²⁾ |
|---|---|---|
| Beispiel 3 | 4 - 5 | 60/40 |
| Beispiel 4 | 3 - 4 | 60/40-70/30 |

| | | |
|---|---|---|
| 1) nach AATCC-Test-Methode 118 | | |
| 2) Beständigkeit gegen wäßrig-isopropanolische Lösungen nach Standard-Methode | | |

Die erfindungsgemäße Copolymerisatdispersion (Bsp. 3) ist auch bei diesem Vergleich überlegen.

## Patentansprüche

1. Copolymerisate und Pfropfcopolymerisate aus a) Perfluoralkyl-acrylaten und/oder -methacrylaten der Formeln II bis IV, b) Estern der allgemeinen Formel (I) und c) anderen olefinisch ungesättigten copolymerisierbaren Monomeren: 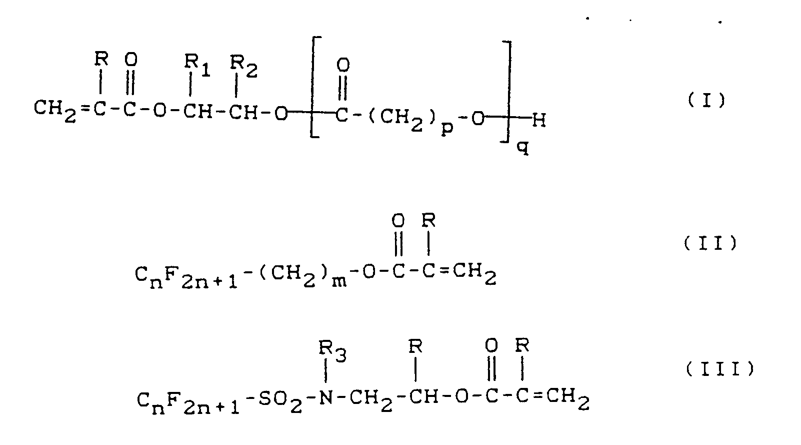 und 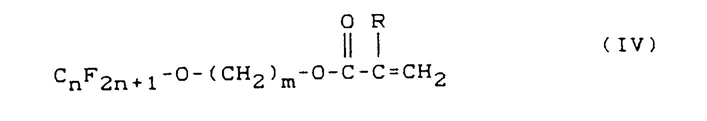 worin
R, R₁, R₂ Wasserstoff oder Methyl,
R₃ Methyl oder Ethyl,
m 1 bis 4 und
n 6 bis 12,
p 2 bis 6 und

2. Pfropfcopolymerisate nach Anspruch 1, dadurch gekennzeichnet, daß als Pfropfgrundlage Melaminpolykondensate eingesetzt werden.

3. Copolymerisate und Pfropfcopolymerisate nach Anspruch 1, dadurch gekennzeichnet, daß das Gewichtsverhältnis von Estern (I) zu Perfluoralkyl(meth)acrylaten 1 : 1,5 bis 6 beträgt.

4. Copolymerisate und Pfropfcopolymerisate nach Anspruch 1, dadurch gekennzeichnet, daß der Anteil der Ester (I) bei 5 bis 35 Gew.-%, der Anteil der Perfluoralkyl(meth)acralate bei 15 bis 65 Gew.-% und weiterer olefinisch ungesättigter Monomeren bei 0 bis 65 Gew.-% liegt.

5. Verfahren zur Herstellung von Copolymerisaten und Pfropfcopolymerisaten des Anspruchs 1, dadurch gekennzeichnet, daß die Copolymerisation durch Radikale bildende Starter initiiert wird.

6. Verfahren zur Ausrüstung von Textilmaterialien, Leder und Papier, dadurch gekennzeichnet, daß man Copolymerisate oder Pfropfcopolymerisate des Anspruchs 1 verwendet.

7. Verfahren zur Hydrophob- und Oleophobausrüstung von Teppichen aus synthetischen Polyamiden, dadurch gekennzeichnet, daß man Copolymerisate oder Pfropfcopolymerisate des Anspruchs 1 verwendet.

## Claims

1. Copolymers and graft copolymers formed from a) perfluoroalkyl acrylates and/or methacrylates of the formulae II to IV, b) esters of the general formula (I) and c) other olefinically unsaturated, copolymerizable monomers: 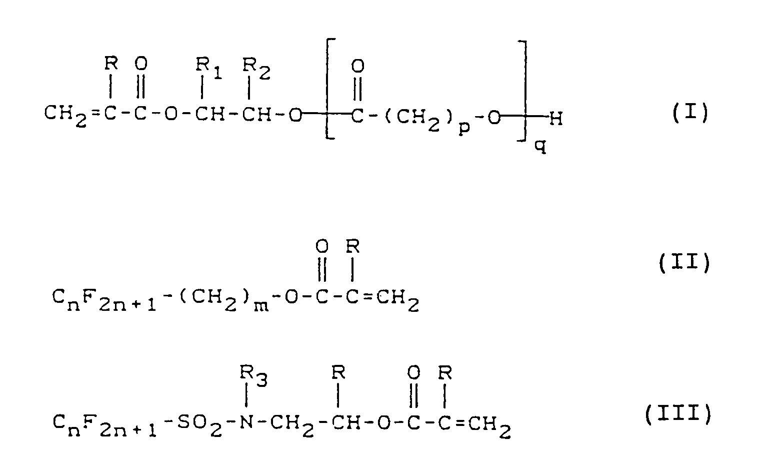 and 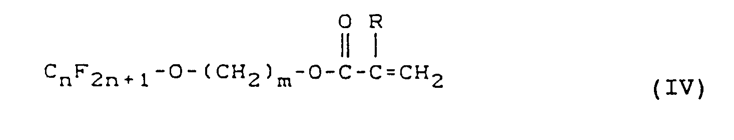 wherein
R, R₁ and R₂ denote hydrogen or methyl,
R₃ denotes methyl or ethyl,
m denotes 1 to 4 and
n denotes 6 to 12,
p denotes 2 to 6 and
q denotes 2 to 200

2. Graft copolymers according to claim 1, characterised in that melamine polycondensates are employed as the graft base.

3. Copolymers and graft copolymers according to Claim 1, characterised in that the ratio by weight of esters (I) to perfluoroalkyl (meth)acrylates is 1:1.5 to 6.

4. Copolymers and graft copolymers according to Claim 1, characterised in that the proportion of the esters (I) is 5 to 35% by weight, the proportion of the perfluoroalkyl (meth)acrylates is 15 to 65% by weight and that of other olefinically unsaturated monomers is 0 to 65% by weight.

5. Process for the preparation of copolymers and graft copolymers of Claim 1, characterised in that the copolymerisation is initiated by initiators which form free radicals.

6. Process for finishing textile materials, leather and paper, characterised in that copolymers or graft copolymers of Claim 1 are used.

7. Process for imparting a water-repellent and oil-repellent finish to carpets composed of synthetic polyamides, characterised in that copolymers or graft copolymers of Claim 1 are used.

## Revendications

1. Copolymères et copolymères greffés a) d'acrylates et/ou de méthacrylates de perfluoralkyle de formules II à IV, b) d'esters de formule générale (I) et c) d'autres monomères copolymérisables à non-saturation oléfinique : 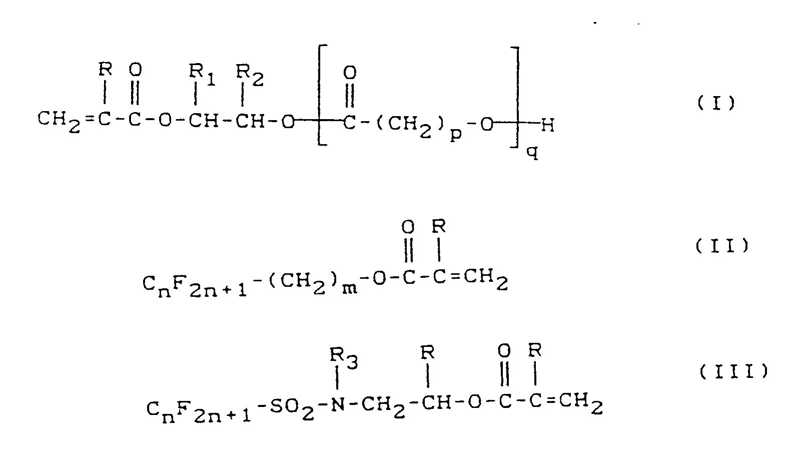 et 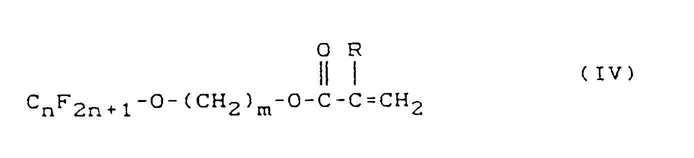 formules dans lesquelles
R, R₁, R₂ représentent l'hydrogène ou le groupe méthyle,
R₃ est le groupe méthyle ou éthyle,
m a une valeur de 1 à 4 et
n a une valeur de 6 à 12,
p a une valeur de 2 à 6 et
q a une valeur de 2 à 200.

2. Copolymères greffés suivant la revendication 1, caractérisés en ce qu'on utilise des polycondensats de mélamine comme substrat de greffage.

3. Copolymères et copolymères greffés suivant la revendication 1, caractérisés en ce que le rapport en poids des esters (I) aux (méth)acrylates de perfluoralkyle a une valeur de 1:1,5 à 6.

4. Copolymères et copolymères greffés suivant la revendication 1, caractérisés en ce que la proportion des esters (I) est de 5 à 35 % en poids, la proportion des (méth)acrylates de perfluoralkyle est de 15 à 65 % en poids et la proportion d'autres monomères à non-saturation oléfinique est de 0 à 65 % en poids.

5. Procédé de production de copolymères et de copolymères greffés suivant la revendication 1, caractérisé en ce que la copolymérisation est amorcée par des initiateurs formant des radicaux.

6. Procédé d'apprêtage de matières textiles, de cuir et de papier, caractérisé en ce qu'on utilise des copolymères ou des copolymères greffés suivant la revendication 1.

7. Procédé d'apprêtage hydrophobe et oléophobe de tapis en polyamides synthétiques, caractérisé en ce qu'on utilise des copolymères ou copolymères greffés suivant la revendication 1.
